(19) **Europäisches Patentamt / European Patent Office / Office européen des brevets**

(11) **EP 3 090 021 B1**

(12) **EUROPEAN PATENT SPECIFICATION**

(45) Date of publication and mention
of the grant of the patent:
**06.06.2018   Bulletin 2018/23**

(21) Application number: **14821206.1**

(22) Date of filing: **29.12.2014**

(51) Int Cl.:
*C08L 23/14* (2006.01)     *C08F 210/06* (2006.01)
*C08F 2/00* (2006.01)

(86) International application number:
**PCT/EP2014/079359**

(87) International publication number:
**WO 2015/101593 (09.07.2015 Gazette 2015/27)**

(54) **PROCESS FOR PRODUCING PROPYLENE TERPOLYMER**

VERFAHREN ZUR HERSTELLUNG VON PROPYLENTERPOLYMER

PROCÉDÉ DE PRODUCTION D'UN TERPOLYMÈRE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2013   EP 13199886**

(43) Date of publication of application:
**09.11.2016   Bulletin 2016/45**

(73) Proprietor: **Borealis AG**
**1220 Vienna (AT)**

(72) Inventors:
• **VESTBERG, Torvald**
**FIN-06100 Porvoo (FI)**
• **ALASTALO, Kauno**
**FIN-06400 Porvoo (FI)**
• **LESKINEN, Pauli**
**FIN-00700 Helsinki (FI)**
• **PITKÄNEN, Päivi**
**FIN-07190 Halkia (FI)**
• **MÄKELÄ-VAARNE, Nora**
**01150 Söderkulla (FI)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 1 941 997     EP-A1- 2 065 087**
**WO-A1-98/58971     WO-A1-2009/019169**

**Description**

The present invention is directed to a new process for producing a propylene terpolymer composition, i.e. a process for producing propylene terpolymer with ethylene and $C_4$ to $C_8$ $\alpha$-olefins. Further the invention is directed to the terpolymer composition prepared by the method and use of the terpolymer composition for producing articles.

Polypropylenes are suitable for many applications. For instance polypropylene is applicable in areas where sealing properties play an important role, like in the food packing industry. Irrespectively from the polymer type, a polymer must fulfill all desired end properties and additionally must be easily processable. However, end properties and processing properties act often in a conflicting manner.

In many cases, the seal which is formed between the surfaces to be sealed is put under load while it is still warm. This means that the hot-tack properties of the polypropylene are crucial to ensure that a strong seal is formed even before cooling. But not only the hot tack strength should be rather high but it is also desired that the heat sealing initiation temperature should be rather low. By operating at lower temperature there is the benefit that the article to be sealed is not exposed to a too high temperature. High temperatures are often to be avoided e.g. in food packaging applications. There are also economic advantages since lower temperatures are of course cheaper to generate and maintain.

Apart from the sealing properties in food industry also low amounts of extractables as well low amounts of volatile compounds are required. Volatile compounds originate typically from monomers not reacted during the polymerization process. Especially higher monomers containing more than 4 carbon atoms tend to be less reactive and thus cause problems, like deterioration in organoleptic properties. However, such monomers are on the other hand advantageous for polymer properties.

Propylene compositions, like propylene terpolymers, are as such known in the art. Further, propylene terpolymers have been used e.g. as packaging material also in food industry. However, there is still room to improve the process for producing propylene terpolymer composition with improved properties.

In some applications, especially in film applications, a homogeneous material to ensure a homogeneous film surface is required. Catalyst residues, especially catalyst carrier residues, like silica or MgCl, might be harmful in final products. Further, too low comonomer conversion might cause bubbling, due to the gas formation of unreacted monomers, like butane, and thus increasing gel formation in the polymer.

WO98758971 discloses terpolymer compositions being a mixture of two different terpolymer compositions, where in the final composition the weight ratio of ethylene to higher olefins is said to be below 0,3, and in the final composition content of ethylene to be 1 to 10 wt-% and content of higher olefins 5 to 25 wt-%. Preferred ranges for films are 0.3 to 3 wt-% and 1 to 15 wt-%, respectively. Polymer is produced in a process comprising a combination of slurry and gas phase reactors. As catalyst is used Ziegler-Natta catalyst supported on $MgCl_2$ support. Promising heat sealing properties are obtained.

WO2009/019169 discloses a process for producing propylene terpolymer comprising as comonomers ethylene and 4 - 8 C atom containing alpha-olefin. Process is carried out in gas-phase reactor comprising two interconnected polymerization zones. As catalyst is used $MgCl_2$ supported Ziegler-Natta catalyst.

Drawbacks in known terpolymers relate to missing balance with all desired properties, problems in process operability or in further processing of polymer or harmful residues or gel appearance in final polymer and too high volatile amounts.

Accordingly the object of the present invention is to provide an improved process for producing polypropylene terpolymer composition exhibiting good balance between desired properties, like high hot tack strength, low heat sealing initiation temperature (SIT) and low amount of xylene soluble and low volatile organic compounds, and further containing low amounts of gels indicating low amounts of catalyst residues, typically originating from catalyst carrier, or low monomer conversion.

Thus, one object of the present invention is to provide a polymerization method for producing propylene terpolymers, where the conversion of the monomers is improved.

Thus, the present invention is directed to the preparation of the propylene terpolymer composition (P) from propylene, ethylene and $C_4$ to $C_8$ $\alpha$-olefin comonomers, especially ethylene and 1-butylene comonomers.

Summary of the Invention

Accordingly, the present invention provides a process for the preparation of a propylene copolymer composition (P) by polymerizing propylene with ethylene and $C_4$ to $C_8$ $\alpha$-olefin comonomers in a sequential polymerization process comprising two reactors connected in series, wherein said process comprises the steps of

(A) polymerizing in a first reactor (R-1), propylene, ethylene and a $C_4$ to $C_8$ $\alpha$-olefin comonomer, and obtaining a propylene terpolymer fraction (A),

(B) transferring said propylene terpolymer fraction (A) and unreacted ethylene and $C_4$ to $C_8$ $\alpha$-olefin comonomers from the first reactor into a second reactor (R-2),

(C) optionally feeding to said second reactor (R-2) propylene, ethylene and/or $C_4$ to $C_8$ $\alpha$-olefin comonomer,

(D) polymerizing propylene, ethylene and $C_4$ to $C_8$ $\alpha$-olefin comonomer in said second reactor (R-2), in the presence of said propylene terpolymer fraction (A), and

obtaining a the propylene copolymer composition (P) comprising the propylene terpolymer fraction (A) and the propylene terpolymer fraction (B) produced in said second reactor (R-2), wherein further

(i) the temperature in the first reactor (R-1) is preferably of equal or more than 60 °C to equal or below 90 °C,

(ii) the temperature in the second reactor (R-2) is preferably of equal or more than 65 °C to equal or below 90 °C,

(iii) in the first reactor (R-1) and second reactor (R-2) the polymerization takes place in the presence of a solid catalyst component having a surface area measured according to ASTM D 3662 of less than 20 m$^2$/g,

wherein further

(I) said solid catalyst component comprises

(Ia) a transition metal selected from one of the groups 4 to 6 of the periodic table (IUPAC),

(Ib) a metal which is selected from one of the groups 1 to 3 of the periodic table (IUPAC), and

(Ic) an internal electron donor (ID).

The instant propylene copolymer composition (P) is produced in a sequential polymerization process. The term "sequential polymerization process" indicates that the propylene copolymer composition (P) is produced in at least two reactors connected in series. More precisely the term "sequential polymerization process" indicates in the present application that the polymer of the first reactor (R-1), i.e. the propylene terpolymer fraction (A), is directly conveyed with unreacted comonomers to the second reactor (R-2) in which the propylene terpolymer fraction (B) is produced. Accordingly, a decisive aspect of the present process is the preparation of the propylene copolymer composition (P) in two different reactors, wherein the reaction material of the first reactor (R-1) is directly conveyed to the second reactor (R-2), and thus the propylene copolymer composition (P) comprises two fractions, namely (A) and (B). Accordingly the present process comprises at least a first reactor (R-1) and a second reactor (R-2). In one specific embodiment the instant process consists of two polymerization reactors (R-1) and (R-2). The term "polymerization reactor" shall indicate that the main polymerization takes place. Thus in case the process consists of two polymerization reactors, this definition does not exclude the option that the overall process comprises for instance a pre-polymerization step in a pre-polymerization reactor. The term "consists of" is only a closing formulation in view of the main polymerization reactors. In case of comprising a pre-polymerization reactor, (A) means the sum of copolymers produced in the pre-polymerization reactor and the first polymerization reactor (R-1).

The first reactor (R-1) is preferably a slurry reactor (SR) and can be any continuous or simple stirred batch tank reactor or loop reactor operating in bulk or slurry. By "bulk polymerization" is meant a process where the polymerization is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. Thus, preferably bulk means a polymerization in a reaction medium that comprises of at least 60 % (wt/wt). According to the present invention the slurry reactor (SR) is preferably a (bulk) loop reactor (LR).

The second reactor (R-2) is preferably gas phase reactor (GPR). Such gas phase reactor (GPR) can be any mechanically mixed or fluidized bed reactor or settled bed reactor. Preferably the gas phase reactor (GPR) comprises a mechanically agitated fluidized bed reactor with gas velocities of at least 0.2 m/sec. The gas phase reactor of a fluidized bed type reactor can further include a mechanical agitator to facilitate the mixing within the fluidized bed.

A preferred multistage process is a "loop-gas phase"-process, such as developed by Borealis (known as BORSTAR® technology) described e.g. in patent literature, such as in WO-A-98/58976, EP-A-887380 and WO-A-98/58977.

Preferably in the first reactor (R-1), preferably in the slurry reactor (SR), like in the loop reactor (LR), the temperature is equal or more than 60°C, preferably in the range of equal or more than 60 °C to equal or below 90 °C, still more preferably in the range of equal or more than 65 °C to equal or below 85 °C, like in the range of 65 °C to equal or below 80 °C.

The pressure in the first reactor (R-1), preferably in the slurry reactor (SR), like in the loop reactor (LR), is not a critical issue, however is typically within the range of 15 bar to 100 bar, preferably between 25 bar to 80 bar, more preferably 35 to 70 bar. Hydrogen can be added for controlling the molar mass in a manner known per se.

Subsequently, the reaction mixture from the first reactor (R-1) is transferred to the second reactor (R-2), i.e. to the gas phase reactor (GPR-1), whereby the temperature in the second reactor (R2) is preferably within the range of equal or more than 65 °C to equal or below 90 °C, more preferably of equal or more than 65 °C to equal or below 85 °C, still more preferably equal or more than 65 °C to equal or below 80 C. The higher temperature can be even equal or below 75 °C.

Further it is preferred that in the second reactor (R-2), preferably in the gas phase reactor (GPR-1), the pressure is within the range of 5 bar to 50 bar, preferably between 15 bar to 40 bar, more preferably 20 to 30 bar. Hydrogen can be added for controlling the molar mass in a manner known per se.

The residence time can vary in both reactor zones.

In one embodiment of the process for producing propylene terpolymer the residence time in bulk reactor, e.g. loop, is in the range 0.2 to 4 hours, e.g. 0.3 to 2,0 hours, more preferably in the range of 0.4 to 1.5h, and the residence time in gas phase reactor (GPR) will generally be 0.2 to 6.0 hours, like 0.5 to 4.0 hours, more preferably 1 to 2,0 h.

The present process preferably encompasses a pre-polymerization (Pr) prior to the polymerization in the first reactor (R-1). The pre-polymerization (Pr) can be conducted in the first reactor (R-1), however it is preferred that the pre-polymerization (Pr) takes place in a separate reactor, so called pre-polymerization reactor (Pr-R). A pre-polymerization reactor is of smaller size compared to the first (R-1) and second (R-2) reactor, respectively. The reaction volume of the pre-polymerization reactor (Pr-R) can be e.g. between 5 % and 40 % of the reaction volume of the first reactor (R-1), like the loop reactor. In said pre-polymerization reactor (Pr-R), the pre-polymerization (Pr) is performed in bulk or slurry as defined for the first reactor (R-1) above.

Further it is appreciated that the pre-polymerization temperature is rather low, i.e. equal or below 50 °C, more preferably between equal or more than 10 °C to equal or below 50 °C, yet more preferably between 12 to 45 °C, even more preferably between 15 to 40 °C, like between 20 and 35°C.

The pressure during pre-polymerization can be between 20 to 80 bar, preferably between 25 to 75 bar, like 30 to 70 bar, or 40-60 bar. Residence times can vary between 0.1 to 1.0 hours, like between 0.2 and 0.6 hours, typically 15 to 30 minutes.

In one embodiment of the invention, no further comonomers are fed into the second reactor (R-2). In another embodiment, only ethylene is fed as a comonomer into the second reactor (R-2). In a further embodiment, both ethylene and $C_4$ to $C_8$ α-olefin are fed into the second reactor (R-2).

Production split between the first and send reactors, i.e. the ratio (as wt-%) of polymer produced in each reactor is between 20:80 to 20:80, preferably 40:60 to 60:40, still more preferably 40:60 to 50:50.

In all embodiments of the present invention $C_4$ to $C_8$ α-olefin is preferably $C_4$ to $C_6$ α-olefin, preferably 1-butene or 1-hexene, especially 1-butene.

It is preferred to purge the polymer after the polymerisation to reduce the amount of residual hydrocarbons in the polymer. Typically the purging step is conducted in a purge vessel where the polymer is contacted with a purge gas. The temperature during the purging step is from 30 to 110 °C, preferably from 30 to 95 °C and more preferably from 40 to 80 °C. The average residence time is from 5 to 240 minutes, preferably from 10 to 200 minutes. Preferably the purging step is conducted continuously. In a preferred embodiment the polymer particles are introduced to the top of the purge vessel and removed from the bottom. Thereby a downward flow of polymer particles is established. The purge gas is typically introduced at the bottom of the purge vessel so as to achieve a counter-current flow of particles and gas.

The gas flow is selected so that no fluidization of the polymer particles occurs in the purge vessel. Thereby a narrow residence time distribution of the polymer particles is obtained and the process has a good efficiency.

Catalyst

In the following, the catalyst and catalyst preparation is described:
As indicated above, one further important aspect of the present invention is that a specific solid catalyst component must be used in the instant polymerization process.

The solid catalyst component (SC) used comprises

(a) a transition metal selected from one of the groups 4 to 6, in particular of group 4 of the periodic table (IUPAC), preferably Ti,
(b) a metal which is selected from one of the groups 1 to 3 of the periodic table (IUPAC), preferably of group 2 of the periodic table (IUPAC), in particular Mg,
(c) an internal electron donor (ID), and
(d) optionally an aluminium compound

In addition to the solid catalyst component (SC) the polymerization catalyst comprises cocatalyst(s), like an aluminium compound and external donor(s), like an organo silane compounds as is well known in the art and will be described in more detail later. These components are not part of the solid catalyst component as defined above, but are fed separately to the polymerization process.

The metal of Group 1 to 3, is preferably a metal of Group 2, and most preferably is Mg, is brought in the solid catalyst component as a metal compound (CM) which forms with the internal electron donor (ID) or its precursor (P-ID) a complex (C). In turn the group 4 to 6 transition metal is brought in the solid catalyst component as a transition metal compound (CT). Further information concerning this matter is provided below.

A remarkable feature of the used catalyst component (SC) is that it is of solid form. In other words for the propylene copolymer composition (P) polymerization an heterogeneous catalysis is applied, i.e. the aggregate state (solid state) of the catalyst component (SC) differs from the aggregate state of the reactants, i.e. the propylene, ethylene and other α-olefins used. Different to traditional known solid catalysts, the catalyst component (SC) used in the present invention is a so-called self-supported catalyst system, or in other words in the solid catalyst component (SC) active catalyst components are not supported on any external support or carrier material. Thus, the solid catalyst component used in the present invention does not comprise in any significant amounts catalytically inert material used normally as support material. Inert support material according to this invention is any material which is used to decrease solubility of the catalyst systems in media which are generally used in polymerization processes as well in common solvents like pentane, heptane and toluene. Typical inert support materials are organic and inorganic support materials, like silica, $MgCl_2$ or porous polymeric material. These support materials are generally used in amounts of at least 50 wt.-%, more preferably of at least 70 wt.-%. Accordingly in the preparation of the solid catalyst component (SC) used in the present invention, no external support material is used and thus the amount of such an inert support material within the solid catalyst component (SC) is of not more than 10.0 wt.-%, yet more preferably below 5.0 wt.-%, yet more preferably not detectable.

Typically the solid catalyst component (SC) is in a form of solid particles having a surface area measured according to the commonly known BET method with $N_2$ gas as analysis adsorptive (ASTM D 3663) less than 20 $m^2$/g. In some embodiments the surface area is preferably less than 15 m2/g, more preferably less than 10 $m^2$/g. In some other embodiments, the solid catalyst particles show a surface area 5 $m^2$/g or less, which is the lowest detection limit with the methods used in the present invention.

The solid catalyst particles can be additionally or alternatively defined by the pore volume measured according to ASTM 4641. Thus it is appreciated that the solid catalyst particles are of a pore volume of less than 1.0 ml/g. In some embodiments the pore volume is more preferably of less than 0.5 ml/g, still more preferably of less than 0.3 ml/g and even less than 0.2 ml/g. In another preferred embodiment the pore volume is not detectable when determined according to ASTM 4641.

Moreover the solid catalyst particles are typically of a mean particle size of not more than 500 μm, i.e. preferably in the range of 2 to 500 μm, more preferably 5 to 200 μm. It is in particular preferred that the mean particle size is below 100 μm, still more preferably below 80 μm. A preferred range for the mean particle size is 10 to 80 μm. In some embodiments mean particle size is preferably in the range of 10 to 60 μm.

As indicated above the solid catalyst component (SC) used in the present invention is most preferably in the form of spherical, compact particles having smooth surface. Further, particle size distribution is narrow.

The solid catalyst component (SC) is preferably obtainable, i.e. obtained, by a process comprising contacting

(a) a solution of a complex (C) of a metal, which is selected from one of the groups 1 to 3 of the periodic table (IUPAC), and an internal electron donor (ID), said complex (C) is obtained by reacting a compound (CM) of said metal with said internal electron donor (ID) or a precursor (P-ID) thereof,
with
(b) a liquid transition metal compound (CT) or a solution of a transition metal compound (CT).

Accordingly one important aspect of the preparation of the solid catalyst system is that neither the complex (C) nor the transition metal compound (CT) are present in solid form during the solid catalyst component (SC) preparation, as it is the case for supported catalyst systems. Instead the complex (C) and transition metal comound (CT) are reacted in liquid state with each other.

The solution of a complex (C) of the metal, which is selected from one of the groups 1 to 3 of the periodic table (IUPAC), and the internal electron donor (ID) is obtained by reacting a compound (CM) of said metal with said internal electron donor (ID) or a precursor (P-ID) thereof in an organic solvent.

The metal compound (CM) used for the preparation of the complex (C) may be any metal compound (CM) which is selected from one of the groups 1 to 3 of the periodic table (IUPAC). However it is preferred that the complex (C) is a Group 2 metal complex, even more preferred a magnesium complex. Accordingly it is appreciated that the metal compound (CM) used in the preparation of said complex (C) is a Group 2 metal compound, like a magnesium compound.

Thus first a metal compound (CM) which is selected from one of the groups 1 to 3 of the periodic table (IUPAC), preferably from a Group 2 metal compound, like from a magnesium compound, containing preferably an alkoxy moiety is produced. More preferably the metal compound (CM) to be produced is selected from the group consisting of a Group 2 metal dialkoxide, like magnesium dialkoxide, a Group 2 metal alkyl alkoxide, like magnesium alkyl alkoxide, and a Group 2 metal alkoxide halide, like magnesium alkoxy halide, most preferably magnesium dialkoxide.

Thus the metal compound (CM) which is selected from one of the groups 1 to 3 of the periodic table (IUPAC), preferably from the Group 2 metal compound, like from the magnesium compound, is usually titaniumless.

Most preferably, the magnesium compound is provided by reacting an alkyl magnesium compound with an alcohol. Thereby, at least one magnesium compound precursor, selected from the group consisting of a dialkyl magnesium $R_2Mg$, an alkyl magnesium alkoxide RMgOR, alkyl magnesium halide RMgX, wherein each R is an identical or a different $C_1$ to $C_{20}$ alkyl, and wherein X is a halogen, is reacted with at least one alcohol, selected from the group consisting of monohydric alcohols R'OH. In addition to the monohydric alcohol also polyhydric alcohols R'(OH)m, wherein R' is a $C_1$ to $C_{20}$ hydrocarbyl group and m is an integer selected from 2, 3,4 ,5 and 6 can be used, to give said magnesium compound (CM). R' is the same or different in the formulas R'OH and R'(OH)m. Preferably only monohydrc alcohol is used. The R of the dialkyl magnesium is preferably an identical or different $C_4$ to $C_{12}$ alkyl. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Typical alkyl-alkoxy magnesium compounds are ethyl magnesium butoxide, butyl magnesium pentoxide, octyl magnesium butoxide and octyl magnesium octoxide. Most preferably, one R is a butyl group and the other R of $R_2Mg$ is an octyl group, i.e. the dialkyl magnesium compound is butyl octyl magnesium.

Preferable monohydric alcohols are those of formula R'OH in which R' is a $C_2$ to $C_{16}$ alkyl group, most preferably a $C_4$ to $C_{12}$ alkyl group, like 2-ethyl-1-hexanol.

Typical polyhydric alcohols, if used, are ethylene glycol, propene glycol, trimethylene glycol, 1, 2-butylene glycol, 1, 3-butylene glycol, 1, 4-butylene glycol, 2, 3-butylene glycol, 1,5-pentanediol, 1,6-hexanediol, 1,8-octanediol, pinacol, diethylene glycol, triethylene glycol, glycerol, trimethylol propane and pentaerythritol. Most preferably the polyhydric alcohol is selected from the group consisting of ethylene glycol, 2-butyl-2-ethyl-1,3-propanediol and glycerol.

The reaction conditions used to obtain the metal compound (CM) which is selected from one of the groups 1 to 3 of the periodic table (IUPAC), preferably the metal compound (CM) of Group 2, even more preferred the magnesium compound, may vary according to the used reactants and agents. However according to one embodiment of the present invention, said magnesium compound precursor is reacted with said at least one alcohol at temperature of 30 to 80 °C for 10 to 90 min, preferably about 30 min.

After having obtained the metal compound (CM) which is selected from one of the groups 1 to 3 of the periodic table (IUPAC), preferably the metal compound of Group 2, even more preferred the magnesium compound, said compound (CM) is further reacted with an internal electron donor (ID) or electron donor precursor (P-ID). The internal electron donor (ID) is preferably a mono- or diester of a carboxylic acid or diacid, the latter being able to form a chelate-like structured complex, preferably a mono- or diester of an aromatic carboxylic acid or diacid. Said carboxylic acid ester or diester, preferably the mono- or diester of the aromatic carboxylic acid or diacid, can be formed in situ by reaction of an carboxylic acid halide or diacid halide, i.e. a preferred internal electron donor precursor (P-ID), with a C2-C16 alkanol and/or diol. Preferably said metal compound (CM) reacts with an internal electron donor precursor (P-ID), i.e. with a dicarboxylic acid dihalide to give the complex (C).

Among non-aromatic dicarboxylic acid dihalides, the group consisting of maleic acid dihalide, fumaric acid dihalide and their R" substituted derivatives such as citraconic acid dihalide and mesaconic acid dihalide, respectively.

Among the cyclic, preferably aromatic, dicarboxylic acid dihalides, the group consisting of phthalic acid dihalide (1,2-benzene dicarboxylic acid dihalide), its hydrogenate 1,2-cyclohexane dicarboxylic acid dihalide, and their derivatives, is the most important. Most preferably, said dicarboxylic acid dihalide is phthaloyl dichloride.

Preferably the magnesium compound is reacted with the dicarboxylic acid halide in a molar ratio Mg total added/dicarboxylic acid halide of 1 : 1 and 1 : 0.1, preferably between 1 : 0. 6 and 1 : 0. 25.

Preferably the metal compound (CM) which is selected from one of the groups 1 to 3 of the periodic table (IUPAC), more preferably the metal compound of Group 2, even more preferably the magnesium compound, is reacted with the internal electron donor (ID) or with the internal electron donor precursor (P-ID), i.e. the dicarboxylic acid dihalide, under at least one of the following conditions:

- adding said dicarboxylic acid dihalide under temperature of 15 to 30 °C and
- heating the obtained reaction mixture to a temperature of 20 to 80 °C, preferably of 50 to 70 °C
- keeping the temperature for 10 to 90 min, preferably for 25 to 35 min.

The organic solvent used for the preparation of the complex (C) can be any organic solvent as long as it is ensured that the complex (C) is dissolved at ambient temperatures, i.e. at temperatures up to 80 °C (20 to 80 °C). Accordingly it is appreciated that the organic solvent comprises, preferably consists of, C5 to C10 hydrocarbon, more preferably of a C6 to C10 aromatic hydrocarbon, like toluene.

Suitable transition metal compounds (CT) are in particular transition metal compounds (CT) of transition metals of groups 4 to 6, in particular of group 4 or 5, of the periodic table (IUPAC). Suitable examples include Ti and V, in particular preferred is a compound of Ti, like $TiCl_4$.

In addition to the compounds described above, the solid catalyst component (SC) can comprise e.g. reducing agents, like compounds of group 13, preferably Al-compounds containing alkyl and/or alkoxy residues, and optionally halogen residues, i.e. aluminium acompound of the formula $AlR_3-nX_n$, where R is an alkyl and/or an alkoxy group of 1 to 20, preferably of 1 to 10 carbon atoms, X is a halogen and n is 0, 1, 2 or 3, These compounds can be added into the solid catalyst component (SC) preparation at any step before the final recovery.

After contacting the solution of the complex (C) with the liquid of the transition metal compound (CT) or the solution of the transition metal compound (CT) either the solid catalyst component (SC) spontaneous precipitates or alternatively an emulsion is formed, the latter being preferred. Whether an emulsion is obtained or an immediate precipitation occurs depend on the specific conditions chosen. Reference is made inter alia to the International patent applications WO 03/000754, WO 03/000757, and WO 2007/077027 as well as to the European patent application EP 2 251 361. In the following the emulsion method is described in more detail.

Emulsion method:

The solid catalyst system according to the emulsion method is obtained by

(a) preparing a solution of a complex (C) of a metal which is selected from one of the groups 1 to 3 of the periodic table (IUPAC) and an internal electron donor (ID), said complex (C) is obtained by reacting a compound (CM) of said metal with said internal electron donor (ID) or a precursor (P-ID) thereof in an organic solvent,
(b) mixing said solution of complex (C) with a liquid transition metal compound (CT),
(c) obtaining thereby an emulsion of a continuous phase and an dispersed phase, said dispersed phase is in form of droplets and forms the catalyst phase and comprises the complex (C) and the transition metal compound (CT),
(d) solidifying the droplets of the dispersed phase obtaining thereby the solid catalyst component (SC).

Accordingly for the emulsion method the complex (C) is preferably dissolved in an C6 to C10 aromatic hydrocarbon, like toluene and contacted with a liquid transition metal compound (CT), preferably with a liquid transition metal compound (CT) of transition metals of groups 4 to 6, in particular of group 4, of the periodic table (IUPAC), like Ti (e.g. $TiCl_4$). Due to the contact of the solution of the complex (C) with the liquid transition metal compound (CT) an emulsion is formed. The production of a two-phase, i.e. of an emulsion, is encouraged by carrying out the contacting at low temperature, specifically above 10 °C but below 60 °C, preferably between above 20 °C and below 50 °C. The emulsion comprises a continuous phase and a dispersed phase in form of droplets. In the dispersed phase the complex (C) as well as the transition metal compound (CT) is present.

Additional catalyst components, like an aluminium compound, like aluminium alkyl, aluminium alkyl halide or aluminium alkoxy or aluminium alkoxy alkyl or halide or other compounds acting as reducing agents can be added to the reactions mixture at any step before the final recovery of the solid catalyst system. Further, during the preparation, any agents enhancing the emulsion formation can be added. As examples can be mentioned emulsifying agents or emulsion stabilisers e.g. surfactants, like acrylic or metacrylic polymer solutions and turbulence minimizing agents, like alpha-olefin polymers without polar groups, like polymers of alpha olefins of 6 to 20 carbon atoms.

Suitable processes for mixing the obtained emulsion include the use of mechanical as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, additives employed, such as surfactants, etc. are used for adjusting the size of the solid catalyst component (SC) particles.

Said solid catalyst component (SC) particles may then be formed and recovered in usual manner, including the solidification of the catalyst droplets by heating (for instance at a temperature of 70 to 150 °C, more preferably at 90 to 110 °C) and separating steps (for recovering the catalyst particles). In this connection reference is made to the disclosure in the international applications WO 03/000754, WO 03/000757, WO 2007/077027, WO 2004/029112 and WO 2007/077027 disclosing suitable reaction conditions. This disclosure is incorporated herein by reference. The solid catalyst particles obtained may furthermore be subjected to further post-processing steps, such as washing, stabilizing prior to the final use in polymerisation process.

In a preferable embodiment of the preparation of the catalyst, the solid catalyst component is prepared by a process comprising: preparing a solution of magnesium complex by reacting an alkoxy magnesium compound and an electron donor or precursor thereof in a C6-C10 aromatic liquid reaction medium; reacting said magnesium complex with a compound of at least one four-valent Group 4 metal at a temperature greater than 10 °C and less than 60 °C to produce an emulsion of a dispersed phase, being a denser catalyst phase, where having, Group 4 metal/Mg mol ratio 0.1 to 10 and the continuous phase having Group 4 metal/Mg mol ratio 10 to 100; agitating the emulsion, optionally in the presence of an emulsion stabilizer and/or a turbulence minimizing agent, in order to maintain the droplets of said dispersed phase within an average size range of 5 to 200 μm. The catalyst particles are obtained after solidifying said particles of the dispersed phase by heating. In said process an aluminium compound of the formula $AlR_3-nX_n$, where R is an alkyl and/or an alkoxy group of 1 to 20, preferably of 1 to 10 carbon atoms, X is a halogen and n is 0, 1, 2 or 3, is added and brought into contact with the droplets of the dispersed phase of the agitated emulsion or during the washing step of the solidified particles before recovering the final solid particles. The aluminium compound is preferably trialkyl aluminium such as trimethylaluminium, triethylaluminium, tri-isobutylaluminium or tri-n-octylaluminium. However, it may also be an alkylaluminium halide, such as diethylaluminium chloride, dimethylaluminium chloride and ethylaluminium sesquichloride.

In addition to the solid catalyst component (SC) the catalyst used in the invention may comprise conventional cocatalyst, e.g. those based on compounds of group 13 of the periodic table (IUPAC), e.g. organo aluminum, such as aluminum compounds, like aluminum alkyl, aluminum halide or aluminum alkyl halide compounds, preferably trialuminium compounds, aluminium di alkyl halide or aluminium alkyl dihalide compounds. As preferred examples of aluminium cocatalysts can be mentioned trimethylaluminium, triethylaluminium, tri-isobutylaluminium or tri-n-octylaluminium., diethylaluminium chloride, dimethylaluminium chloride and ethylaluminium dichloride and methylaluminium dichloride. Especially preferred are triethylaluminium, diethylaluminium chloride and ethylaluminium dichloride.

Additionally one or more external donors can be used which may be typically selected e.g. from silanes or any other well known external donors in the field. External donors are known in the art and are used as stereoregulating agent in propylene polymerization. The external donors are preferably selected from diethylamino-triethoxy-silane , hydrocarbyloxy silane compounds and hydrocarbyloxy alkane compounds.

Typical hydrocarbyloxy silane compounds have the formula (II)

$$R'_0Si(OR'')_{4-0}     \text{(II)}$$

wherein

R'    is an a- or b-branched C3 to C12-hydrocarbyl,
R"    a C1 to C12-hydrocarbyl, and
0    is an integer 1-3.

More specific examples of the hydrocarbyloxy silane compounds which are useful as external electron donors in the invention are diphenyldimethoxy silane, dicyclopentyldimethoxy silane, dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane, cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane. Most preferably, the organo silane compounds are diethylamino-triethoxy-silane, cyclohexylmethyl dimethoxy silane , or dicyclopentyl dimethoxy silane, the latter especially preferred.

It has surprisingly been found that such a propylene copolymer composition (P) prepared as described above has a low heat sealing initiation temperature (SIT), low volatiles and low melt temperature in combination with other desired properties.

Further, it has been shown that the in the pesent process, where the catalyst as described above is used, the conversion of the monomers, ethylene and $C_4$ to $C_8$ comonomers is clearly improved compared to processes, where supported Ziegler-Natta catalysts are used.

In the following the propylene copolymer composition (P), i.e. propylene terpolymer composition obtainable by, preferably obtained by the method of the invention is defined in more detail.

The propylene copolymer composition (P) according to this invention is featured by a moderate to low comonomer content. A "comonomer" according to this invention is ethylene and the C4-C8 comonomer, especially ethylene and 1-butene.

Accordingly the propylene copolymer composition (P) according to this invention shall have a ethylene content of at least 0.3 wt%. Thus it is preferred that the propylene copolymer composition (P) according to this invention has ethylene content in the range of 0.3 wt-% to 4 wt-%, more preferably in the range of 0.4 to 3.0 wt-%, still more preferably in the range of 0.5 to 2.5 wt-%, especially in the range of 1.0 - 2.0 wt-%.

Moreover, the propylene copolymer composition (P) according to this invention shall have a C4-comonomer content of at least 5 wt-%, preferably from 5 to 12 wt-%, more preferably from 5 to 10 wt-%, like 6 to 8 wt-%.

The propylene terpolymer fraction (A) hereby has an ethylene content of at least 0,3 wt-%, preferably 0.3 to 4.0 wt-%, more preferably from 0.4 to 3.5 wt-%, most preferably from 0.5 to 2.5 wt-%, and especially 0,8 to 2.0 wt-%.

The propylene terpolymer fraction (A) hereby has $C_4$ to $C_8$-comonomer content of at least 5 wt-%, preferably 5 to 12 wt-%, more preferably from 5 to 10 wt-%, most preferably from 6 to 10 wt-%, and especially 6 to 8 wt-%.

Comonomer contents of terpolymer fraction (B) is not possible to measure, but can be calculated based on the contents of the fraction (A) and final composition (P) and production split between the reactors.

The propylene terpolymer (A) may have the same or a different $C_2$-comonomer content like propylene terpolymer (B).

The propylene terpolymer (A) may have the same or a different $C_4$ to $C_8$-comonomer content like propylene terpolymer (B).

The propylene copolymer composition (P) has a melt flow rate MFR$_2$ (230 °C) measured according to ISO 1133 in the range of 2.0 to 50.0 g/10min, preferably in the range of 3 to 40 g/10 min, more preferably in the range of 3 to 30 g/10 min, still more preferably in the range of 4 to 20 g/10 min and yet more preferably in the range of 4 to 15 g/10 min.

The propylene terpolymer fraction (A) has melt flow rate MFR$_2$ (230 °C) measured according to ISO 1133 in the range of 2.0 to 50.0 g/10min, preferably 2.0 to 40.0 g/10min, more preferably 2.0 to 30.0 g/10min, like 3.5 to 20.0 g/10min, and most preferably 3 to 15 g/10 min.

The propylene terpolymer fraction (B) has calculated melt flow rate MFR$_2$ (230 °C) according to ISO 1133 in the range of 2.0 to 50.0 g/10min, preferably 2.0 to 40.0 g/10min, more preferably 2.0 to 30.0 g/10min, like 2.0 to 20.0 g/10min.

The melt flow rate MFR$_2$ (230 °C) of propylene terpolymer (A) may be the same or different from that of propylene terpolymer (B).

As mentioned above, the inventive propylene copolymer composition (P) shall be especially suitable for the packing industry. Accordingly good sealing properties are desired, like rather low heat sealing initiation temperature (SIT) combined with low melt temperature and low xylene solubles. Combination of low melt temperature and low xylene soluble is a surprising feature of the polymer.

SIT is defined to be a minimum sealing temperature required to form a seal of significant strength, which is defined to be in this application 1,0 N.

The propylene copolymer composition (P) according to the invention fulfills the equation (I)

$$\mathrm{Tm - SIT} \geq 25\ °\mathrm{C} \qquad (\mathrm{I})$$

wherein

Tm is the melting temperature given in centigrade [°C] of the propylene copolymer (P), and
SIT is the heat sealing initiation temperature (SIT) given in centigrade [°C] of the propylene copolymer (P).

In the present case the Tm is rather low. Thus, the difference between the melting temperature $T_m$ and the heat sealing initiation temperature (SIT) shall not be too high. Hence, it is preferred that the propylene copolymer composition (P) fulfills the equation (Ia), more preferably the equation (Ib), and yet more preferably the equation (Ic),

$$43\ °\mathrm{C} \geq \mathrm{Tm - SIT} \geq 25\ °\mathrm{C} \qquad (\mathrm{Ia})$$

$$40\ °\mathrm{C} \geq \mathrm{Tm - SIT} \geq 28\ °\mathrm{C} \qquad (\mathrm{Ib})$$

$$38\ °\mathrm{C} \geq \mathrm{Tm - SIT} \geq 30\ °\mathrm{C} \qquad (\mathrm{Ic})$$

wherein

Tm    is the melting temperature given in centigrade [°C] of the propylene copolymer composition (P),
SIT    is the heat sealing initiation temperature (SIT) given in centigrade [°C] of the propylene copolymer composition (P).

Accordingly it is preferred that the propylene copolymer composition (P) has a heat sealing initiation temperature (SIT) of not more than 110 °C, more preferably not more than 105 °C, still more preferably in the range of 85 to 110 °C, more preferably in the range of 90 to 105 °C, yet more preferably in the range of 95 to 100 °C.

The melting temperature ($T_m$) measured according to ISO 11357-3 of the propylene copolymer composition (P) is at most 140°C, preferably at least 125.0 °C, more preferably of at least 128 °C. Thus it is in particular appreciated that the melting temperature ($T_m$) measured according to ISO 11357-3 of the propylene copolymer composition (P) is in the range of 125 to 140 °C, more preferably in the range of 128 to 137 °C, especially in the range of 130 to 134°C.

Additionally, the propylene copolymer composition (P) of the instant invention has crystallization temperature ($T_c$) measured according to ISO 11357-3 of at least 88 °C, more preferably of at least 90 °C. Accordingly the polypropylene has preferably a crystallization temperature ($T_c$) measured according to ISO 11357-3 in the range of 90 to 110 °C, more preferably in the range of 95 to 110 °C.

Additionally the propylene copolymer can be defined by the xylene cold soluble (XCS) content measured according to ISO 6427. Accordingly the propylene copolymer composition (P) is preferably featured by a xylene cold soluble (XCS) content of below 20 wt.-%, more preferably of below 15 wt.-%. Thus it is in particular appreciated that the propylene copolymer composition (P) of the instant invention has a xylene cold soluble (XCS) content in the range of 1 to 20 wt.-%, more preferably in the range of 2 to 15 wt.-% and most preferably in the range of 2 to 9 wt.-%.

The present invention further has the advantage that the content of volatile organic compounds (VOC) of the propylene copolymer composition (P) is very low. In one embodiment of the invention, the VOC relating to $C_3$ to $C_4$ after the purge bin is below 1000 wt-ppm, preferably below 750 wt-ppm. Furher, the amount of gels can be seen to be very low compared to the reference indicating that amount of residual butane (i.e. low butane conversion in the process) and harmful catalyst residues is very low. The amount of gels can be measured optically using Optical control System.

The propylene copolymer composition (P) may contain additives known in the art, like antioxidants, nucleating agents, slip agents and antistatic agents. The polymer fraction, preferably the sum of the propylene terpolymer (A) and the propylene terpolymer (B) fractions, is at least 90 wt.-%, more preferably at least 95 wt.-%, still more preferably at least 98 wt.-%, like at least 99 wt.-%.

Further the invention is directed to the use of the instant propylene copolymer composition (P) as a film, like a cast film, an extrusion blown film or a biaxially oriented polypropylene (BOPP) film. The propylene copolymer composition (P) of the present invention can be also used as a coating of an extrusion coated substrate.

In the following the present invention is further illustrated by means of examples.

## EXAMPLES

### A. Measuring methods

**Calculation** of the ethylene and 1-butene content, respectively, of the propylene terpolymer fraction (B):

$$\frac{C(R2) - w(A)x\, C(A)}{w(B)} = C(B)$$

wherein

w(A)    is the weight fraction of the propylene terpolymer fraction (A), i.e. the product of the first reactor (R1),
w(B)    is the weight fraction of the propylene terpolymer fraction (B), i.e. of the polymer produced in the second reactor (R2),
C(A)    is the etheylene or 1-butene content [in wt.-%] of the propylene terpolymer fraction (A), i.e. of the product of the first reactor (R1),
C(R2)   is the etheylene or 1-butene content [in wt.-%] of the product obtained in the second reactor (R2), i.e. the propylene copolymer composition (P),
C(B)    is the calculated etheylene or 1-butene content [in wt.-%] of the propylene terpolymer fraction (B).

**Calculation** of the xylene cold soluble (XCS) content of the propylene terpolymer fraction (B):

$$\frac{XS(R2) - w(A)x\, XS(A)}{w(B)} = XS(B)$$

wherein

w(A)    is the weight fraction of the propylene terpolymer fraction (A), i.e. the product of the first reactor (R1),
w(B)    is the weight fraction of the propylene terpolymer fraction (B), i.e. of the polymer produced in the second reactor (R2),
XS(A)   is the xylene cold soluble (XCS) content [in wt.-%] of the propylene terpolymer fraction (A), i.e. of the product of the first reactor (R1),
XS(R2)  is the xylene cold soluble (XCS) content [in wt.-%] of the product obtained in the second reactor (R2), i.e. the propylene copolymer composition (P),
XS(B)   is the calculated xylene cold soluble (XCS) content [in wt.-%] of the propylene terpolymer fraction (B).

**Calculation** of melt flow rate MFR$_2$ (230 °C) of the propylene terpolymer fraction (B):

$$MFR(B) = 10^{\left[\frac{\log(MFR(P))-w(A)\ x\ \log(MFR(A))}{w(B)}\right]}$$

wherein

w(A)   is the weight fraction of the propylene ethylene random copolymer fraction (A), i.e. the product of the first reactor (R1),

w(B)   is the weight fraction of the propylene ethylene random copolymer fraction (B), i.e. of the polymer produced in the second reactor (R2),

MFR(A)   is the melt flow rate MFR$_2$ (230 °C) [in g/10min] of the propylene ethylene random copolymer fraction (A),

MFR(P)   is the melt flow rate MFR$_2$ (230 °C) [in g/10min] of the product obtained in the second reactor (R2), i.e. the propylene ethylene random copolymer (P),

MFR(B)   is the calculated melt flow rate MFR$_2$ (230 °C) [in g/10min] of the propylene ethylene random copolymer fraction (B).

**MFR$_2$ (230 °C)** is measured according to ISO 1133 (230 °C, 2.16 kg load).

## Content of ethylene

Ethylene content in propylene polymer was measured by Fourier transmission infrared spectroscopy (FTIR). A thin film of the sample (thickness approximately 250 $\mu$m) was prepared by hot-pressing. The area of -CH2- absorption peak (800 - 650 cm$^{-1}$) was measured with Perkin Elmer FTIR 1600 - spectrometer. The method was calibrated by ethylene content data measured by $^{13}$C NMR.

## Content of 1-butene

The 1-butene content was measured by using FTIR according to the procedure described above. The butene content was determined from the peak at 767 cm$^{-1}$. The base line was determined between wave numbers 780 and 750 cm$^{-1}$. The 1-butene content was calculated as $w_B$ = B·(A/$\Delta$Abs)+C, where $w_B$ is the content of 1-butene in weight-%, A and B are constants obtained from calibration, A is the area under the 1-butene peak at 767 cm$^{-1}$ and $\Delta$Abs is the difference between the absorbance of the reference peaks at 4323 and 4700 cm$^{-1}$, or A(4323cm$^{-1}$) - A(4700 cm$^{-1}$).

## Xylene soluble

The amount of xylene soluble fraction was determined according to ISO 16152.

## Determination of volatile compounds:

The volatile components as described above were determined by using a gaschromatograph and a headspace method. The equipment was a Hewlett Packard gas chromatograph with a 25 m x 0.32 mm x 2.5 $\mu$m (length x diameter x size of packing material) non-polar column filled with DB-1 (100 % dimethyl polysiloxane). A flame ionisation detector was used with hydrogen as a fuel gas. Helium at 10 psi was used as a carrier gas with a flow rate of 3 ml/min. After the injection of the sample the oven temperature was maintained at 50°C for 3 minutes, after which it was increased at a rate of 12°C/min until it reached 200°C. Then the oven was maintained at that temperature for 4 minutes, after which the analysis was completed.

The calibration was carried out as follows: At least three and preferably from five to ten reference solutions were prepared, containing from 0.1 to 100 g of n-octane dissolved in 1 litre of dodecane. The concentration of octane in the reference solutions should be in the same area as the range of the volatiles in the samples to be analysed. 4 $\mu$l of each solution was injected into a 20 ml injection flask, which was thermostated to 120°C and analysed. A calibration factor Rf for the area under the n-octane peak, A, vs. the amount of n-octane in the solution in $\mu$g, C, was thus obtained as Rf = C/A.

The analysis was conducted as follows: The polymer sample (about 2 grams) was placed in the 20 ml injection flask, which was thermostated to 120°C and kept at that temperature for one hour. A gas sample from the injection flask was then injected into the GC. Before the analysis, a blind run was conducted, where an injection from an empty flask was made. The hydrocarbon emission E was then calculated as follows: E = AT☐ydrocarbon emission E was the

hydrocarbon emission as $\mu$g volatile compounds per gram of sample, AT is the total area under the sample peaks in area counts, Rf is the calibration factor for n-octane in $\mu$g per area count, and W is the weight of the sample in grams.

Homogeneity of the polymer composition product was analyzed by an Optical Control System (OCS); Film-Test FSA100), provided by Optical Control Systems GmbH, which measures gels and 35 contaminants in the film produced from the PP. The gels and contaminants are recognized optoelectronically by their different light transmittance compared to the film matrix. A translucent 70 $\mu$m thick blown film was photographed using high resolution line cameras and appropriate background illumination. The number and the area of gels per total film area are then calculated using an image recognition software.

**Melting temperature Tm, crystallization temperature Tc:** measured with Mettler TA820 differential scanning calorimetry (DSC) on 5 to 10 mg samples. DSC is run according to ISO 11357 / part 3 /method C2 in a heat / cool / heat cycle with a scan rate of 10 °C/min in the temperature range of +23 to +210°C. Crystallization temperature and enthalpy are determined from the cooling step, while melting temperature and melting enthalpy are determined from the second heating step.

**Hot tack, Sealing temperature range and SIT**

The method determines the sealing temperature range (sealing range) of polymer films. The sealing temperature range is the temperature range, in which the films can be sealed according to conditions given below.

In the present invention the lower limit (hot tack initiation temperature (SIT)) is the sealing temperature at which a sealing strength of > 1 N is achieved (aluminium foil as substrate) with the given film thickness.

The sealing range is determined on a DTC Hot tack tester Model 52-F/201 with a film of 100 $\mu$m thickness with the following further parameters:

| | |
|---|---|
| Seal Pressure: | 0.3 N/mm$^2$ |
| Seal Time: | 0.5 sec |
| Cool time: | 0.10 sec |
| Peel Speed: | 200 mm/sec |
| Start temperature: | 90 °C |
| End temperature: | 130 °C |
| Sample width: | 25.40 mm |
| Force range: | 10.0 N |

**Porosity:** BET with $N_2$ gas, ASTM 4641, apparatus Micromeritics Tristar 3000; sample preparation: at a temperature of 50 °C, 6 hours in vacuum.

**Surface area:** BET with $N_2$ gas ASTM D 3663, apparatus Micromeritics Tristar 3000: sample preparation at a temperature of 50 °C, 6 hours in vacuum.

**Mean particle size** is given in nm and measured with Coulter Counter LS200 at room temperature with n-heptane as medium; particle sizes below 100 nm by transmission electron microscopy.

**B. Examples**

Catalyst preparation

Comparative Example Catalyst C-CAT

First, 0.1 mol of MgCl2 x 3 EtOH was suspended under inert conditions in 250 ml of decane in a reactor at atmospheric pressure. The solution was cooled to the temperature of -15°C and 300 ml of cold TiCl4 was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of TiCl4 was added and the temperature was kept at 135 °C for 120 minutes. After this, the catalyst was filtered from the liquid and washed six times with 300 ml heptane at 80 °C. Then, the solid catalyst component was filtered and dried.

**Inventive catalyst example I-CAT**

The solid catalyst component was prepared otherwise according to Example 8 of WO 2004/029112, except that diethylaluminium chloride was used as an aluminium compound instead of triethylaluminium. Catalyst has a surface area measured by BET method below 5 m$^2$/g, i.e. below the detection limit.

**Comparative Example CE1**

A stirred tank reactor having a volume of 45 dm3 was operated as liquid-filled at a temperature of 27 °C and a pressure of 49 bar. Into the reactor was fed propylene so much that the average residence time in the reactor was 0.3 hours together with 1.5 g/h hydrogen and 0.7 g/h of polymerization catalyst prepared according to Catalyst Preparation - Comparative Example above with triethyl aluminium (TEA) as a cocatalyst and dicyclopentyldimethoxysilane (DCPDMS) as external donor so that the molar ratio of TEA/Ti was about 570 and TEA/DCPDMS was 4.7.

The slurry from this prepolymerization reactor was directed to a loop reactor having a volume of 150 dm3 together with 160 kg/h of propylene. The loop reactor was operated at a temperature of 70 °C and a pressure of 49 bar. Ethylene and 1-butene were introduced at feed rates of 0.4 and 45 kg/h, respectively. Hydrogen was introduced so that the ratio of hydrogen to propylene was 5.4 mol/kmol. The production rate of propylene copolymer was 30 kg/h, the melt flow rate MFR2 was 11 g/10 min and the contents of ethylene and 1-butene units in the copolymer were 0.1 and 8 % by weight, respectively.

The polymer slurry from the loop reactor was directly conducted into a first gas phase reactor operated at a temperature of 79 °C and a pressure of 19 bar. Into the reactor were fed additional propylene, ethylene, 1-butene and hydrogen, as well as nitrogen as an inert gas, so that the content of propylene was 50 % by mole and the ratio of hydrogen to propylene was 41 mol/kmol, ethylene to propylene was 55 mol/kmol and 1-butene to propylene 190 mol/kmol. The production rate in the reactor was 15 kg/h and the polymer withdrawn from the reactor had a melt flow rate MFR2 of 6.4 g/10 min and a content of ethylene and 1-butene units in the copolymer of 2.0 and 8.6 % by weight, respectively.

The reaction mixture from the first gas phase reactor was introduced into a purge bin where a settled bed of copolymer was purged with a purge gas containing nitrogen and steam. The average residence time of the polymer in the purge bin was 30 minutes at a temperature of 60 °C.

The polymer withdrawn from the reactor was mixed with effective amounts of Irgafos 168, Irganox 1010 and hydrotalcite. The mixture of polymer and additives was then extruded to pellets by using a ZSK70 extruder (product of Coperion) under nitrogen atmosphere.

**Comparative Example CE2**

A stirred tank reactor having a volume of 45 dm3 was operated as liquid-filled at a temperature of 28 °C and a pressure of 52 bar. Into the reactor was fed propylene so much that the average residence time in the reactor was 0.3 hours together with 2.0 g/h hydrogen and 1.4 g/h of polymerization catalyst prepared according to Catalyst Preparation - Comparative Example above with triethyl aluminium (TEA) as a cocatalyst and dicyclopentyldimethoxysilane (DCPDMS) as external donor so that the molar ratio of TEA/Ti was about 460 and TEA/DCPDMS was 6. The slurry from this prepolymerization reactor was directed to a loop reactor having a volume of 150 dm3 together with 150 kg/h of propylene. The loop reactor was operated at a temperature of 67 °C and a pressure of 51 bar. Ethylene and 1-butene were introduced at feed rates of 0.7 and 40 kg/h, respectively. Hydrogen was introduced so that the ratio of hydrogen to propylene was 5.7 mol/kmol. The production rate of propylene copolymer was 30 kg/h, the melt flow rate MFR2 was 7 g/10 min and the contents of ethylene and 1-butene units in the copolymer were 0.45 and 9.8 % by weight, respectively. The polymer slurry from the loop reactor was directly conducted into a first gas phase reactor operated at a temperature of 79 °C and a pressure of 19 bar. Into the reactor were fed additional propylene, ethylene, 1-butene and hydrogen, as well as nitrogen as an inert gas, so that the content of propylene was 72 % by mole and the ratio of hydrogen to propylene was 90 mol/kmol, ethylene to propylene was 19 mol/kmol and 1-butene to propylene 185 mol/kmol. The production rate in the reactor was 42 kg/h and the polymer withdrawn from the reactor had a melt flow rate MFR2 of 6.1 g/10 min and a content of ethylene and 1-butene units in the copolymer of 1.6 and 8.0 % by weight, respectively.

The reaction mixture from the first gas phase reactor was introduced into a purge bin where a settled bed of copolymer was purged with a purge gas containing nitrogen and steam. The average residence time of the polymer in the purge bin was 30 minutes at a temperature of 60 °C.

The polymer withdrawn from the reactor was mixed with effective amounts of Irgafos 168, Irganox 1010 and hydrotalcite. The mixture of polymer and additives was then extruded to pellets by using a ZSK70 extruder (product of Coperion) under nitrogen atmosphere.

**Inventive Example - IE1**

A stirred tank reactor having a volume of 45 dm3 was operated as liquid-filled at a temperature of 30 °C and a pressure of 53 bar. Into the reactor was fed propylene so much that the average residence time in the reactor was 0.3 hours together with 2.0 g/h hydrogen and 6,0 g/h of polymerization catalyst prepared according to Catalyst Preparation Example above with triethyl aluminium (TEA) as a cocatalyst and dicyclopentyldimethoxysilane (DCPDMS) as external donor so that the molar ratio of TEA/Ti was about 50 and TEA/DCPDMS was 9.

The slurry from this prepolymerization reactor was directed to a loop reactor having a volume of 150 dm3 together with 150 kg/h of propylene. The loop reactor was operated at a temperature of 67 °C and a pressure of 52 bar. Ethylene and 1-butene were introduced at feed rates of 0.5 and 32 kg/h, respectively. Hydrogen was introduced so that the ratio of hydrogen to propylene was 2,1 mol/kmol. The production rate of propylene copolymer was 28kg/h, the melt flow rate MFR2 was 9.3g/10 min and the contents of ethylene and 1-butene units in the copolymer were 1.3 and 7.2 % by weight, respectively.

The polymer slurry from the loop reactor was directly conducted into a first gas phase reactor operated at a temperature of 70 °C and a pressure of 23 bar. Into the reactor were fed additional propylene, ethylene, 1-butene and hydrogen, as well as nitrogen as an inert gas, so that the content of propylene was 73 % by mole and the ratio of hydrogen to propylene was 70 mol/kmol, ethylene to propylene was 2 mol/kmol and 1-butene to propylene 26 mol/kmol. The production rate in the reactor was 41 kg/h and the polymer withdrawn from the reactor had a melt flow rate $MFR_2$ of 7.1 g/10 min and a content of ethylene and 1-butene units in the copolymer of 1.8 and 7.4 % by weight, respectively.

The reaction mixture from the first gas phase reactor was introduced into a purge bin where a settled bed of copolymer was purged with a purge gas containing nitrogen and steam. The average residence time of the polymer in the purge bin was 30 minutes at a temperature of 60 °C.

The polymer withdrawn from the reactor was mixed with effective amounts of Irgafos 168, Irganox 1010 and hydrotalcite. The mixture of polymer and additives was then extruded to pellets by using a ZSK70 extruder (product of Coperion) under nitrogen atmosphere.

In table 1 the preparation conditions as well polymer results are disclosed.

**Table 1**

| Example | CE1 | CE2 | IE1 |
|---|---|---|---|
| Catalyst type | C-CAT | C-CAT | I-CAT |
| TEA/Ti | 570 | 460 | 52 |
| TEA/DCPDMS | 4.7 | 6 | 9.0 |
| **1. Loop reactor** | | | |
| Propylene feed (kg/h) | 160 | 150 | 150 |
| Ethylene feed (kg/h) | 0.4 | 0.7 | 0.5 |
| H2/C3 ratio (mol/kmol) | 5.4 | 5.7 | 2.1 |
| Butene feed (kg/h) | 45 | 40 | 32 |
| Production rate (kg/h) | 30 | 30 | 28 |
| Split % | 45 | 42.6 | 45 |
| MFR2 (g/10 min) | 11 | 7.0 | 9.3 |
| C4 content wt-% | 8.0 | 9.8 | 7.2 |
| XS (%) | 1.9 | 7.4 | 6.0 |
| C2 content (%) | 0.10 | 0.45 | 1.30 |
| **2. 1st gas phase reactor** | | | |
| Propylene feed (kg/h) | 46 | 80 | 80 |
| Ethylene feed (kg/h) | 3.39 | 2.37 | 3.95 |
| Propylene concentratrion (mol-%) | 50 | 72 | 73 |
| H2/C3 ratio (mol/kmol) | 41 | 90 | 68 |
| C2/C3 ratio (mol/kmol) | 55 | 19 | 2 |
| C4/C3 ratio (mol/kmol) | 190 | 185 | 26 |
| Split % | 55 | 57 | 55 |

(continued)

| 2. 1st gas phase reactor | | | |
|---|---|---|---|
| MFR2 (g/10 min) | 8.4 | 6.7 | 7.1 |
| XS (%) | 10.1 | 6.0 | 7.1 |
| Ethene content (%) | 2.0 | 1.1 | 1.8 |
| Butene content | 8.6 | 9.1 | 7.4 |
| **Final Polymer** | | | |
| MFR2 (g/10 min) | 6.1 | 6.5 | 7.1 |
| C2 content wt-% | 2 | 1.3 | 1.8 |
| C4 content wt-% | 8 | 8.0 | 7.4 |
| XS (%) | 9.1 | 4.8 | 7.1 |
| Tm °C | 136.7 | 134.6 | 132.6 |
| Tc °C | 99.1 | 98.9 | 97.4 |

It can be seen from the table that very good C4 conversion was achieved with the process of the invention. Consequently low amount of volatiles and gels could be seen with the polymer produced by the method of the invention (see Table 2). Further, low melting temperature combined with reasonable low XS can be seen.

Volatile contents and OCS Gel results of polymers of CE2 and IE1 are given in Table 2

**Table 2**

| | CE2 | IE1 |
|---|---|---|
| Amount of volatiles, $\mu$g/g | 3100 | 420 |
| OCS: Gels/m$^2$ < 700 $\mu$m | 29300 | 45 |
| OCS: Gels/m$^2$ <700 -1500 $\mu$m | 150 | 1 |

Hot tack results (Hot Tack (N/25.4 mm)) of polymer composition of the invention (IE1) are given in Table 3

**Table 3:**

| Temp.(°C) | IE1 |
|---|---|
| 90 | 0.228 |
| 95 | 0.236 |
| 100 | 1.406 |
| 105 | 3.163 |
| 110 | 3.178 |
| 115 | 2.486 |
| 120 | 2.866 |
| 125 | 5.612 |
| 130 | 7.252 |

Test conditions:

Seal pressure    0.3 N/mm$^2$

(continued)

| | |
|---|---|
| Seal time | 0.50 s |
| Cool time | 0.10 s |
| Peel speed | 200.0 mm/s |
| Sample width | 25.40 mm |
| Force range | 10.0 N |

It can be seen that hot tack force of 1 N is achieved at a temperature above 95 °C and well below 100

**Claims**

1. Process for producing the propylene terpolymer composition (P) by polymerizing propylene with ethylene and $C_4$ to $C_8$ $\alpha$-olefin comonomers, in a sequential polymerization process with at least two reactors connected in series, wherein said process comprises the steps of

   (A) polymerizing in a first reactor (R-1), propylene, ethylene and $C_4$ to $C_8$ $\alpha$-olefin comonomer, and obtaining a propylene terpolymer fraction (A),
   (B) transferring said propylene terpolymer fraction (A) and unreacted comonomers from the first reactor into a second reactor (R-2),
   (C) optionally feeding to said second reactor (R-2) propylene, ethylene and/or $C_4$ to $C_8$ $\alpha$-olefin comonomer,
   (D) polymerizing propylene, ethylene and $C_4$ to $C_8$ $\alpha$-olefin comonomer in said second reactor (R-2), in the presence of said propylene terpolymer fraction (A)

   and
   obtaining the propylene copolymer composition (P), comprising the propylene terpolymer fraction (A) and the propylene terpolymer fraction (B) produced in said second reactor (R-2),
   wherein further

   (i) the temperature in the first reactor (R-1) is preferably of equal or more than 60 °C to equal or below 90 °C,
   (ii) the temperature in the second reactor (R-2) is preferably of equal or more than 65 °C to equal or below 90 °C,
   (iii) in the first reactor (R-1) and second reactor (R-2) the polymerization takes place in the presence of a solid catalyst component (SC) being in solid form without any external support material and having a surface area measured according to ASTM D 3662 of less than 20 m$^2$/g,

   wherein further

   (I) said solid catalyst component (SC) comprises
   (Ia) a transition metal selected from one of the groups 4 to 6 of the periodic table (IUPAC),
   (Ib) a metal which is selected from one of the groups 1 to 3 of the periodic table (IUPAC), and
   (Ic) an internal electron donor (ID).

2. The process according to claim 1, wherein the first reactor (R-1) is a slurry reactor, preferably a slurry-loop reactor, and the second reactor (R-2) is a gas phase reactor.

3. The process according to claim 1 or 2, wherein in the first reactor (R-1) polymerization temperature is in the range of 60 to 80 °C, and in the second reactor (R-2) polymerization temperature is in the range of 65 to 85 °C.

4. The process according to any preceding claim, wherein the propylene polymer composition (P) is a terpolymer composition having ethylene (C2) amount in the range of 0.3 to 4.0 wt-%, and $C_4$ to $C_8$ $\alpha$-olefin comonomer amount in the range of 5 to 12 wt-%,

5. The process according to any of the preceding claim wherein in the propylene terpolymer fraction (A) the ethylene content is in the range of 0.3 to 4.0 wt-% and $C_4$ to $C_8$ $\alpha$-olefin comonomer content is in the range of 5 to 12 wt-%.

6. The process according to any of the preceding claim wherein the $C_4$ to $C_8$ $\alpha$-olefin comonomer is 1-butene.

7. The process according to any of the preceding claim wherein the catalyst is prepared by a method comprising contacting

   (a) a solution of a complex (C) of a metal which is selected from one of the groups 1 to 3 of the periodic table (IUPAC) and an internal electron donor (ID), said complex (C) is obtained by reacting a compound (CM) of said metal with said internal electron donor (ID) or a precursor (P-ID) thereof,
   with
   (b) a liquid transition metal compound (CT) or a solution of a transition metal compound (CT).

8. The process according to any of the preceding claim wherein the propylene copolymer composition (P) has a melting temperature in the range of 125 to 140 °C.

9. The process according to any of the preceding claims, wherein the weight ratio of polymer produced in the first reactor (R-1) to polymer produced in the seond reactor (R-2) is between 20:80 to 80:20, preferably 40:60 to 60:40, more preferably 40:60 to 50:50.

10. Propylene copolymer composition (P), wherein the propylene copolymer composition (P) is obtainable by the process according to any of claims 1 to 9.

11. Use of the propylene copolymer composition (P) according claim 10for producing films.


**Patentansprüche**

1. Verfahren zur Herstellung der Propylen-Terpolymer-Zusammensetzung (P) durch Polymerisieren von Propylen mit Ethylen und $C_4$ bis $C_8$ $\alpha$-Olefin-Comonomeren, in einem sequenziellen Polymerisations-Verfahren mit mindestens zwei in Reihe verbundenen Reaktoren, wobei das Verfahren die Schritte umfasst

   (A) Polymerisieren in einem ersten Reaktor (R-1) Propylen, Ethylen und $C_4$ bis $C_8$ $\alpha$-Olefin-Comonomer, und Gewinnen einer Propylen-Terpolymer-Fraktion (A),
   (B) Überführen der Propylen-Terpolymer-Fraktion (A) und nichtumgesetzter Comonomere von dem ersten Reaktor in einen zweiten Reaktor (R-2),
   (C) gegebenenfalls Zuführen zu dem zweiten Reaktor (R-2) Propylen, Ethylen und/oder $C_4$ bis $C_8$ $\alpha$-Olefin-Comonomer,
   (D) Polymerisieren von Propylen, Ethylen und $C_4$ bis $C_8$ $\alpha$-Olefin-Comonomer in dem zweiten Reaktor (R-2) in Gegenwart der Propylen-Terpolymer-Fraktion (A) und

   Gewinnen der Propylen-Copolymer-Zusammensetzung (P), umfassend die Propylen-Terpolymer-Fraktion (A) und die Propylen-Terpolymer-Fraktion (B), hergestellt in dem zweiten Reaktor (R-2),
   wobei weiterhin

   (i) die Temperatur in dem ersten Reaktor (R-1) vorzugsweise gleich oder mehr als 60°C bis gleich oder unter 90°C ist,
   (ii) die Temperatur in dem zweiten Reaktor (R-2) vorzugsweise gleich oder mehr als 65°C bis gleich oder unter 90°C ist,
   (iii) in dem ersten Reaktor (R-1) und zweiten Reaktor (R-2) die Polymerisation in Gegenwart von einer festen Katalysator-Komponente (SC) stattfindet, die in fester Form ohne beliebiges äußeres Träger-Material vorliegt und ein Oberflächen-Gebiet, gemessen gemäß ASTM D 3662, von weniger als 20 m$^2$/g aufweist,

   wobei weiterhin

   (I) die feste Katalysator-Komponente (SC) umfasst
   (Ia) ein Übergangs-Metall, ausgewählt aus einer der Gruppen 4 bis 6 des Perioden-Systems (IUPAC),
   (Ib) ein Metall, das aus einer der Gruppen 1 bis 3 des Perioden-Systems (IUPAC) ausgewählt ist, und
   (Ic) einen inneren Elektronen-Donor (ID).

2. Verfahren nach Anspruch 1, wobei der erste Reaktor (R-1) ein Slurry-Reaktor bzw. Aufschlämmungs-Reaktor, vorzugsweise ein Slurry-Schleifen-Reaktor bzw. Aufschlämmungs-Schleifen-Reaktor ist, und der zweite Reaktor (R-2) ein Gas-Phasen-Reaktor ist.

**3.** Verfahren nach Anspruch 1 oder 2, wobei in dem ersten Reaktor (R-1) die Polymerisations-Temperatur im Bereich von 60 bis 80°C liegt, und in dem zweiten Reaktor (R-2) die Polymerisations-Temperatur im Bereich von 65 bis 85°C liegt.

**4.** Verfahren nach einem vorangehenden Anspruch, wobei die Propylen-Polymer-Zusammensetzung (P) eine Terpolymer-Zusammensetzung mit der Ethylen (C2)-Menge im Bereich von 0,3 bis 4,0 Gew.-% ist und die $C_4$ bis $C_8$ $\alpha$-Olefin-Comonomer-Menge im Bereich von 5 bis 12 Gew.-% liegt.

**5.** Verfahren nach einem vorangehenden Anspruch, wobei in der Propylen-Terpolymer-Fraktion (A) der Ethylen-Gehalt im Bereich von 0,3 bis 4,0 Gew.-% liegt und der $C_4$ bis $C_8$ $\alpha$-Olefin-Comonomer-Gehalt im Bereich von 5 bis 12 Gew.-% liegt.

**6.** Verfahren nach einem vorangehenden Anspruch, wobei das $C_4$ bis $C_8$ $\alpha$-Olefin-Comonomer 1-Buten ist.

**7.** Verfahren nach einem vorangehenden Anspruch, wobei der Katalysator durch ein Verfahren hergestellt wird, umfassend Inkontaktbringen von

(a) einer Lösung von einem Komplex (C) von einem Metall, das aus einer der Gruppen 1 bis 3 des Perioden-Systems (IUPAC) ausgewählt ist, und einem inneren Elektronen-Donor (ID), wobei der Komplex (C) durch Umsetzen einer Verbindung (CM) des Metalls mit dem inneren Elektronen-Donor (ID) oder einer Vorstufe (P-ID) davon erhalten wird,
mit
(b) einer flüssigen Übergangs-Metall Verbindung (CT) oder einer Lösung von einer Übergangs-Metall Verbindung (CT).

**8.** Verfahren nach einem vorangehenden Anspruch, wobei die Propylen-Copolymer-Zusammensetzung (P) eine Schmelz-Temperatur im Bereich von 125 bis 140°C aufweist.

**9.** Verfahren nach einem der vorangehenden Ansprüche, wobei das Gewichts-Verhältnis von in dem ersten Reaktor (R-1) hergestellten Polymer zu in dem zweiten Reaktor (R-2) hergestellten Polymer zwischen 20:80 bis 80:20, vorzugsweise 40:60 bis 60:40, bevorzugter 40:60 bis 50:50 liegt.

**10.** Propylen-Copolymer-Zusammensetzung (P), wobei die Propylen-Copolymer-Zusammensetzung (P) durch das Verfahren nach einem der Ansprüche 1 bis 9 erhältlich ist.

**11.** Verwendung der Propylen-Copolymer-Zusammensetzung (P) nach Anspruch 10 zur Herstellung von Filmen bzw. Folien.

**Revendications**

**1.** Procédé pour produire une composition de terpolymère de propylène (P) par polymérisation de propylène avec de l'éthylène et des comonomères d'$\alpha$-oléfines en $C_4$ à $C_8$, dans un procédé de polymérisation en séquence avec au moins deux réacteurs connectés en série, lequel procédé comprend les étapes suivantes :

(A) polymérisation, dans un premier réacteur (R-1), de propylène, d'éthylène et de comonomère d'$\alpha$-oléfine en $C_4$ à $C_8$, et obtention d'une fraction de terpolymère de propylène (A),
(B) transfert de ladite fraction de terpolymère de propylène (A) et de comonomères n'ayant pas réagi du premier réacteur dans un deuxième réacteur (R-2),
(C) éventuellement introduction dans ledit deuxième réacteur (R-2) de propylène, d'éthylène et/ou de comonomère d'$\alpha$-oléfine en $C_4$ à $C_8$,
(D) polymérisation de propylène, d'éthylène et de comonomère d'$\alpha$-oléfine en $C_4$ à $C_8$ dans ledit deuxième réacteur (R-2), en présence de ladite fraction de terpolymère de propylène (A), et

obtention de la composition de copolymère de propylène (P), comprenant la fraction de terpolymère de propylène (A) et la fraction de terpolymère de propylène (B) produite dans ledit deuxième réacteur (R-2),

dans lequel en outre

(i) la température dans le premier réacteur (R-1) est de préférence de 60°C ou plus à 90°C ou moins,
(ii) la température dans le deuxième réacteur (R-2) est de préférence de 65°C ou plus à 90°C ou moins,
(iii) dans le premier réacteur (R-1) et le deuxième réacteur (R-2), la polymérisation a lieu en présence d'un composant de catalyseur solide (SC) qui est sous forme solide sans aucun matériau support externe et présentant une surface spécifique, mesurée conformément à la norme ASTM D3662, inférieure à 20 m$^2$/g,

dans lequel en outre

(I) ledit composant de catalyseur solide (SC) comprend
(Ia) un métal de transition choisi parmi l'un des Groupes 4 à 6 du Tableau Périodique (IUPAC),
(Ib) un métal qui est choisi parmi l'un des Groupes 1 à 3 du Tableau Périodique (IUPAC), et
(Ic) un donneur d'électrons interne (ID).

2. Procédé selon la revendication 1, dans lequel le premier réacteur (R-1) est un réacteur en suspension, de préférence un réacteur à boucle en suspension, et le deuxième réacteur (R-2) est un réacteur en phase gazeuse.

3. Procédé selon la revendication 1 ou 2, dans lequel, dans le premier réacteur (R-1), la température de polymérisation est située dans la plage allant de 60 à 80°C, et, dans le deuxième réacteur (R-2), la température de polymérisation est située dans la plage allant de 65 à 85°C.

4. Procédé selon l'une quelconque des revendications précédentes, dans lequel la composition de polymère de propylène (P) et une composition de terpolymère possédant une quantité d'éthylène (C2) située dans la plage allant de 0,3 à 4,0 % en poids, et une quantité de comonomère d'$\alpha$-oléfine en C$_4$ à C$_8$ située dans la plage allant de 5 à 12 % en poids.

5. Procédé selon l'une quelconque des revendications précédentes, dans lequel, dans la fraction de terpolymère de propylène (A), la teneur en éthylène est située dans la plage allant de 0,3 à 4,0 % en poids et la teneur en comonomère d'$\alpha$-oléfine en C$_4$ à C$_8$ est située dans la plage allant de 5 à 12 % en poids.

6. Procédé selon l'une quelconque des revendications précédentes, dans lequel le comonomère d'$\alpha$-oléfine en C$_4$ à C$_8$ est le 1-butène.

7. Procédé selon l'une quelconque des revendications précédentes, dans lequel le catalyseur est préparé par un procédé comprenant la mise en contact

(a) d'une solution d'un complexe (C) d'un métal qui est choisi parmi l'un des Groupes 1 à 3 du Tableau Périodique (IUPAC) et d'un donneur d'électrons interne (ID), ledit complexe (C) étant obtenu par réaction d'un composé (CM) dudit métal avec ledit donneur d'électrons interne (ID) ou un précurseur (P-ID) de celui-ci,
avec
(b) un composé de métal de transition liquide (CT) ou une solution d'un composé de métal de transition (CT).

8. Procédé selon l'une quelconque des revendications précédentes, dans lequel la composition de copolymère de propylène (P) présente un point de fusion situé dans la plage allant de 125 à 140°C.

9. Procédé selon l'une quelconque des revendications précédentes, dans lequel le rapport en poids du polymère produit dans le premier réacteur (R-1) sur le polymère produit dans le deuxième réacteur (R-2) est compris entre 20/80 et 80/20, de préférence entre 40/60 et 60/40, plus préférablement entre 40/60 et 50/50.

10. Composition de copolymère de propylène (P), laquelle composition de copolymère de propylène (P) peut être obtenue par le procédé selon l'une quelconque des revendications 1 à 9.

11. Utilisation de la composition de copolymère de propylène (P) selon la revendication 10 pour la production de films.

**EP 3 090 021 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 98758971 A
- WO 2009019169 A
- WO 9858976 A
- EP 887380 A
- WO 9858977 A
- WO 03000754 A
- WO 03000757 A
- WO 2007077027 A
- EP 2251361 A
- WO 2004029112 A